**Europäisches Patentamt**

**European Patent Office**

**Office européen des brevets**

(19)

(11) Veröffentlichungsnummer: **0 141 208**
**B1**

# (12) EUROPÄISCHE PATENTSCHRIFT

(45) Veröffentlichungstag der Patentschrift:
**20.04.88**

(51) Int. Cl.⁴: **G 21 C 3/34**

(21) Anmeldenummer: **84111072.9**

(22) Anmeldetag: **17.09.84**

(54) Kernreaktorbrennelement.

(30) Priorität: **27.09.83 DE 3334974**

(43) Veröffentlichungstag der Anmeldung:
**15.05.85 Patentblatt 85/20**

(45) Bekanntmachung des Hinweises auf die Patenterteilung:
**20.04.88 Patentblatt 88/16**

(84) Benannte Vertragsstaaten:
**BE DE FR SE**

(56) Entgegenhaltungen:
**EP - A - 0 025 393**
**EP - A - 0 027 203**
**FR - A - 2 449 324**
**US - A - 3 679 546**

(73) Patentinhaber: **Siemens Aktiengesellschaft Berlin und München, Wittelsbacherplatz 2, D-8000 München 2 (DE)**

(72) Erfinder: **Steinke, Alexander, Stettiner Strasse 13, D-8553 Ebermannstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Beschreibung

Die Erfindung betrifft ein Kernreaktorbrennelement mit einem gitterförmigen Abstandshalter, in dem zueinander parallele Stäbe, insbesondere Kernbrennstoff enthaltende Brennstäbe, jeweils in einer Gittermasche befindlich angeordnet sind, der durch flache, zu den Stäben rechtwinklige, hochkant angeordnete Blechstege gebildet ist und der in einer Ecke einer Gittermasche eine mit zwei Endteilen versehene Anlagefeder für einen dort angeordneten Brennstab aufweist, welche mit den beiden Endteilen jeweils in einer Ausnehmung in einem Blechsteg mit einem zu diesem Blechsteg querstehenden Blechsteg verriegelt ist.

Ein derartiges Kernreaktorbrennelement ist aus der EP-A- 0 027 203 bekannt. Anlagefeder und Abstandshalter dieses bekannten Kernreaktorbrennelementes können aus verschiedenen Metallen bestehen, so daß für die Anlagefeder beispielsweise gut federnder Chrom-Nickel-Stahl als Werkstoff gewählt werden kann, während die Blechstege des Abstandshalters aus einer Neutronen nur in geringem Umfang absorbierenden Nickel-, Eisen- oder Zirkoniumlegierung gefertigt sein können. Der Abstandshalter ist ferner einfach zu montieren, und trotzdem sind die Teile der Anlagefeder bei Bruch gegen Herausfallen aus dem Abstandshalter gesichert.

Ein derartiges Kernreaktorbrennelement weist in der Regel ein Kopf- und ein Fußteil auf. Diese sind durch Steuerstabführungsrohre miteinander verbunden. Jedes der Steuerstabführungsrohre ist mit einem Ende an einer Kopfplatte des Kopfteiles und mit dem anderen Ende an einer Fußplatte des Fußteiles lösbar, z.B. mit einer Schraubverbindung befestigt. Die Steuerstabführungsrohre durchsetzen Kopf- und Fußplatte rechtwinklig. Kopf- und Fußplatte sind rechteckig, in der Regel quadratisch.

Die mit den gitterförmigen Abstandshaltern verschweißten Steuerstabführungsrohre sind jeweils in einer quadratischen Gittermasche durch mehrere rechteckige, in der Regel ebenfalls quadratische, gitterförmige Abstandshalter geführt, die in Richtung der Längsachse der Steuerstabführungsrohre und damit auch des Brennelementes gesehen in der Regel gleichen Abstand voneinander haben und die untereinander und mit der Kopf- und Fußplatte fluchten. Brennstäbe, die Kernbrennstoff in gasdicht verschlossenen Hüllrohren enthalten, sind durch die nicht von den Steuerstabführungsrohren besetzten quadratischen Gittermaschen des Abstandshalters geführt. Diese Brennstäbe sind weder an der Kopfplatte des Kopfteiles noch an der Fußplatte des Fußteiles befestigt, sondern sie haben zwischen Kopf- und Fußplatte in Längsrichtung Spiel und können sich daher in Richtung ihrer Längsachse, d.h. in Längsrichtung des Kernreaktorbrennelementes frei dehnen.

Im Reaktorkern, insbesondere eines Druckwasser-Kernreaktors, sind eine Reihe solcher gleich ausgeführter Kernreaktorbrennelemente mit parallelen Längsachsen im Schachbrettmuster dicht nebeneinander angeordnet. Beim Be- und Entladen des Kernreaktors mit den einzelnen Kernreaktorbrennelementen kann es daher zum Verhaken von benachbarten Kernreaktorbrennelementen im Reaktorkern an den vier äußeren Blechstangen der Abstandshalter kommen, was zu einer Zerstörung dieser äußeren Blechstege führt und ein Wiedereinsetzen der Kernreaktorbrennelemente in den Reaktorkern unmöglich macht. Besonders neigen Kernreaktorbrennelemente zum Verhaken, die sich durch Betriebsbeanspruchungen im Reaktorkern stark gekrümmt haben. Es wurden deshalb bereits die beiden zu Stäben, d.h. zu den Steuerstabführungsrohren und den Brennstäben des Kernreaktorbrennelementes rechtwinkligen Kanten der äußeren Blechstege der Abstandshalter mit leicht nach innen geneigten Abweiserfahnen versehen, an denen beim Be- und Entladen des Kernreaktors die zu den Stäben des Kernreaktorbrennelementes rechtwinkligen Kanten der äußeren Blechstege der Abstandshalter von seitlich benachbarten, in Längsrichtung relativ zueinander bewegten Kernreaktorbrennelementen abgleiten können, so daß ein Verhaken an diesen Kanten vermieden wird.

Derartige nach innen geneigte Abweiserfahnen können jedoch an den Ecken eines Abstandshalters des Kernreaktorbrennelementes, in denen sich Brennstäbe als Eckstäbe des Kernreaktorbrennelementes jeweils in einer quadratischen Gittermasche zwischen zwei zueinander rechtwinkligen äußeren Blechstegen befinden, nicht angebracht werden, da sie dort die thermohydraulischen Verhältnisse für das Kühlmittel im Kernreaktor derart verschlechtern, daß diese die Eckstäbe darstellenden Brennstäbe nicht ausreichend gekühlt werden und deshalb Schaden nehmen können. Es besteht deshalb die Gefahr, daß sich im Reaktorkern im Schachbrettmuster diagonal benachbarte Kernreaktorbrennelemente beim Be- und Entladen des Kernreaktors mit den Ecken ihrer Abstandshalter verhaken. Dieses Verhaken kann durch möglichst lange Abweiserschrägen an diesen Ecken zumindest weitestgehend verhindert werden. Ist aber in den Gittermaschen in den Ecken des Abstandshalters auch noch eine Anlagefeder angeordnet und mit ihren zwei Endteilen in einer Ausnehmung an einem äußeren Blechsteg verriegelt, so muß die Höhe des Abstandshalters, d.h. die Breite seiner Blechstege, besonders groß gewählt werden, wenn man an den Ecken des Abstandshalters lange Abweiserschrägen ausbilden will.

Der Erfindung liegt die Aufgabe zugrunde, ein Kernreaktorbrennelement mit einem Abstandshalter zu schaffen, der auch in einer Gittermasche in einer Ecke dieses Abstandshalters eine verriegelte Anlagefeder aufweist und der dennoch sowohl besonders lange Abweiserschrägen an dieser Ecke als auch eine übliche, nicht vergrößerte, sondern optimal geringe Bauhöhe haben kann.

Zur Lösung dieser Aufgabe ist ein Kernreaktorbrennelement der eingangs erwähnten Art erfindungsgemäß dadurch gekennzeichnet, daß die Ausnehmungen für die Endteile der Anlagefeder von einer zu den Stäben parallelen Endkante des Blechsteges des Abstandshalters ausgehen, daß der querstehende Blechsteg einer der vier äußeren Blechstege des Abstandshalters ist und daß die beiden Endteile der Anlagefeder je einen zu diesem äußeren Blechsteg parallelen Ausläuferarm aufweisen, der in eine zu der Gittermasche seitlich benachbarte Gittermasche in einer Ecke des Abstandshalters greift und dort an der Innenseite des äußeren Blechsteges ein Endteil einer Anlagefeder für den in dieser Gittermasche in der Ecke des Abstandshalters angeordneten Brennstab bildet.

Auf diese Weise brauchen in dieser Gittermasche in der Ecke des Abstandshalters des Brennelementes keine Anlagefedern mit ihren beiden Endteilen an den beiden äußeren Blechstegen verriegelt zu werden, so daß volle Gestaltungsfreiheit insbesondere für die Ecke des Abstandshalters gewonnen ist.

Es ist günstig, wenn der äußere Blechsteg in der Gittermasche in der Ecke des Abstandshalters eine Abstützausnehmung aufweist, in die das am Ausläuferarm ausgebildete Endteil der in dieser Gittermasche befindlichen Anlagefeder greift. Dadurch werden Kräfte abgefangen, die in Längsrichtung des in dieser Gittermasche angeordneten Stabes auf die in dieser Gittermasche befindliche Anlagefeder einwirken und die vom diesem Stab ausgehen.

Ferner ist es von Vorteil, wenn der äußere Blechsteg in der Gittermasche in der Ecke des Abstandshalters eine Ausweichausnehmung für die in dieser Gittermasche befindliche Anlagefeder aufweist. Hierdurch ist gewährleistet, daß die Anlagefeder beim Einsetzen des Brennstabes in diese Gittermasche den vollen Federweg nehmen kann.

Die Erfindung und ihre Vorteile seien anhand der Zeichnung an einem Ausführungsbeispiel näher erläutert:

Figur 1 zeigt in perspektivischer Ansicht die Ecke eines Abstandshalters eines erfindungsgemäßen Kernreaktorbrennelementes.

Figur 2 zeigt in Seitenansicht eine Anlagefeder im Abstandshalter nach Figur 1.

Figur 3 zeigt eine Vorderansicht dieser Anlagefeder in Richtung des Pfeiles III in Figur 2.

Figur 4 zeigt eine Unteransicht dieser Anlagefeder in Richtung des Pfeiles IV in Figur 2.

Figur 5 zeigt ein halbes Stanzteil für die Anlagefeder nach den Figuren 2 bis 4.

Figur 6 zeigt in Draufsicht die Gittermasche in der in Figur 1 dargestellten Ecke des Abstandshalters.

Figur 7 zeigt einen Längsschnitt durch die Gittermasche nach Figur 6 entsprechend der strichpunktierten Linie VII–VII.

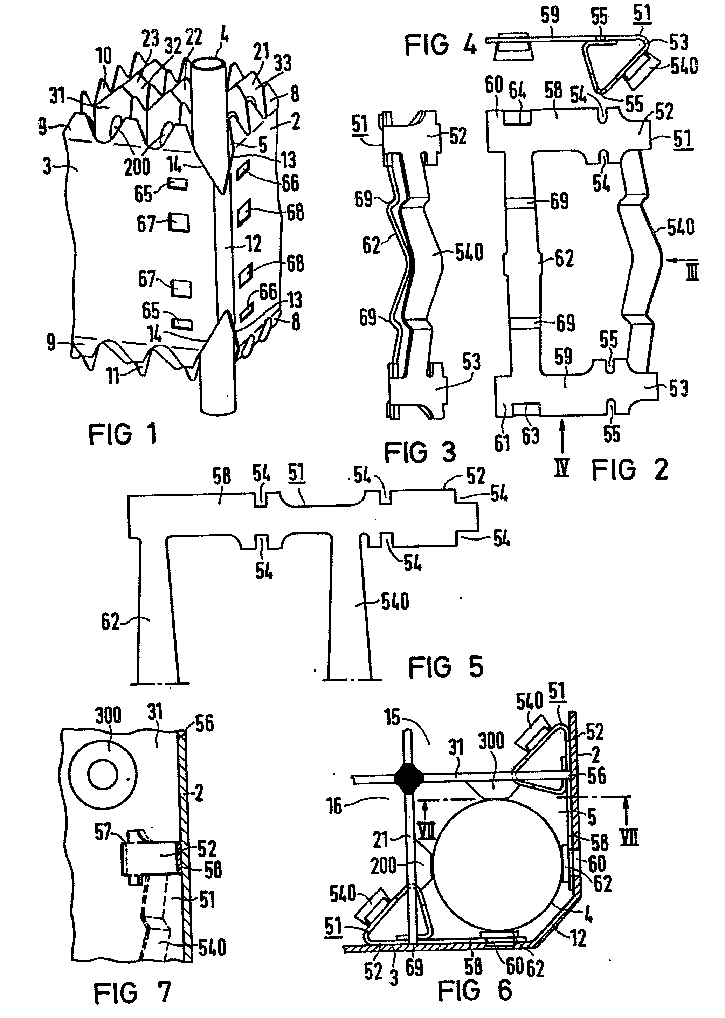

Vom quadratischen gitterförmigen, aus einer Nikkel-Eisen-Legierung bestehenden Abstandshalter eines Kernreaktorbrennelementes gemäß der Erfindung sind in Figur 1 zwei flache ebene äußere Blechstege 2 und 3 zu erkennen, die hochkant angeordnet sind und zueinander rechtwinklig stehen. Auf der Innenseite dieser äußeren Blechstege 2 und 3 sind zum äußeren Blechsteg 2 parallele innere Blechstege 21 bis 23 und zum äußeren Blechsteg 3 parallele innere Blechstege 31 bis 33 erkennbar, die ebenfalls hochkant angeordnet sind und sich rechtwinklig unter Ausbildung von quadratischen Gittermaschen durchsetzen. In einer solchen quadratischen Gittermasche ist jeweils ein Steuerstabführungsrohr oder ein Kernbrennstoff enthaltender Brennstab des Kernreaktorbrennelementes angeordnet, zu denen die inneren und äußeren Blechstege rechtwinklig sind. Der besseren Übersichtlichkeit halber ist nur ein einziger Brennstab 4 in der äußersten, durch die äußeren Blechstege 2 und 3 gebildeten quadratischen Gittermasche 5 in der Ecke des Abstandshalters dargestellt, zu dessen Längsrichtung die Seitenflächen der inneren und äußeren Blechstege parallel sind. Innerhalb der für Brennstäbe bestimmten quadratischen Gittermaschen weisen die inneren Blechstege 21 bis 23 und 31 bis 33 feste Noppen 200 bzw. 300 auf. Ferner ist in einer Ecke einer jeden solchen Gittermasche eine Anlagefeder aus Chrom-Nickel-Stahl für den in dieser Gittermasche befindlichen Brennstab angeordnet. Diese Anlagefeder weist zwei Endteile auf, mit denen die Anlagefeder jeweils in einer Ausnehmung in dem betreffenden Blechsteg mit einem zu diesem betreffenden Blechsteg querstehenden anderen Blechsteg verriegelt und an denen eine zu den Blechstegen 2 und 3 bzw. 21 bis 23 und 31 bis 33 querstehende bzw. zu den Stäben parallele Blattfeder angeformt ist. Die durch einzelne Gittermaschen der gitterförmigen Abstandshalter geführten Steuerstabführungsrohre sind mit diesen Abstandshaltern verschweißt, während Noppen und Anlagefedern in anderen Gittermaschen der gitterförmigen Abstandshalter den in diesen Gittermaschen geführten Brennstäben kraftschlüssig Halt geben. An den zu den zueinander parallelen Steuerstabführungsrohren und Brennstäben im Abstandshalter rechtwinkligen Kanten weisen die äußeren Blechstege 2 und 3 leicht nach innen geneigte Abweiserfahnen 8 und 9 auf. Ferner sind die zu den Steuerstabführungsrohren und Brennstäben rechtwinkligen Kanten der inneren Blechstege 21 bis 23 und 31 bis 33 mit Verwirbelungsfahnen 10 und 11 zum Verwirbeln von das Kernreaktorbrennelement im Kernreaktor durchströmendem Kühlwasser versehen.

Die äußeren Blechstege 2 und 3 sind über einen Zwischenstreifen 12 miteinander verbunden, der sich zwischen diesen beiden äußeren Blechstegen 2 und 3 an der zu den zueinander parallelen Steuerstabführungsrohren und Brennstäben in den Gittermaschen parallelen Außenkante des Abstandshalters befindet, der zu diesen beiden äußeren Blechstegen 2 und 3 geneigt ist und der zu diesen Steuerstabführungsrohren und Brennstäben parallel ist. Die beiden äußeren Blechstege 2 und 3 sind an den Ecken des Abstandshalters ausgehend von ihren zu den im Abstandshalter befindlichen Steuerstabführungsrohren und Brennstäben rechtwinkligen Kanten zu diesem Zwischenstreifen 12 hin unter Ausbildung gleichgeneigter geradliniger Abschrägungskanten 13 und 14 abgeschrägt.

In den Gittermaschen 15 und 16 des Abstandshalters nach Figur 1 ist jeweils in einer Ecke, die seitlich zu der Gittermasche 5 benachbart ist, eine Anlagefeder 51 aus Chrom-Nickel-Stahl für jeweils einen aus einem Brennstab bestehenden Stab angeordnet, der sich in der betreffenden Gittermasche 15 oder 16 befindet. Diese Anlagefeder 51 weist ein oberes Endteil 52 und ein unteres Endteil 53 auf, an denen eine zu dem betreffenden Stab der jeweiligen Gittermasche 15 oder 16 parallele, in die Gittermasche 15 oder 16 hineingewölbte Blattfeder 540 angeformt ist. Oberes und unteres Endteil 52 und 53 sind spiegelbildlich gleich ausgebildet, aus einem aus Chrom-Nickel-Stahl-Blech bestehenden Stanzteil entsprechend Figur 5 gebogen und mit in einer zu den Stäben im Abstandshalter parallelen Geraden liegenden Auskerbungen 54 und 55 im oberen Endteil 52 und im unteren Endteil 53 versehen.

Der zwischen der Gittermasche 15 und der Gittermasche 5 in der Ecke des Abstandshalters befindliche innere Blechsteg 31 weist an seiner zu den Stäben im Abstandshalter parallelen Endkante 56 zwei von dieser Endkante 56 ausgehende Ausnehmungen auf, die Abstand voneinander haben und von denen die der Oberkante des Steges 31 näherliegende Ausnehmung 57 in Figur 7 erkennbar ist. In diesen Ausnehmungen in der zu den Stäben parallelen Endkante 56 sind die beiden Endteile 52 und 53 der Anlagefeder 51 mit den Einkerbungen 54 und 55 eingeschoben und durch den zum inneren Blechsteg 31 querstehenden äußeren Blechsteg 2 verriegelt. Dieser äußere Blechsteg 2 ist an den zu den Stäben parallelen Endkanten des inneren Blechsteges 31 und der zu diesem parallelen anderen inneren Blechstege festgeschweißt.

An beiden Endteilen 52 und 53 der Anlagefeder 51 ist ein Ausläuferarm 58 und 59 angeformt, der jeweils durch die Ausnehmungen (z.B. 57) an der zu den Stäben parallelen Endkante des inneren Blechsteges 31 in die Gittermasche 5 in der Ecke des Abstandshalters greift. Diese Ausläuferarme 58 und 59 sind rechtwinklig zu den Stäben im Abstandshalter. Jeder dieser beiden Ausläuferarme 58 und 59 bildet in der Gittermasche 5 in der Ecke des Abstandshalters an der Innenseite des äußeren Blechsteges 2 ein Endteil 60 und 61 für eine weitere Anlagefeder mit einer Blattfeder 62, die zu den Stäben im Abstandshalter parallel ist und an der der in der Gittermasche 5 befindliche Stab 4 anliegt.

Die in der der Gittermasche 5 seitlich benachbarten Ecke der Gittermasche 16 angeordnete Anlagefeder 51 ist genauso wie die in der Gittermasche 15 angeordnete Anlagefeder 51 ausgebildet und in gleicher Weise in entsprechenden Ausnehmungen an der zu den Stäben parallelen Endkante 69 des inneren Blechsteges 21 durch den äußeren Blechsteg 3 verriegelt. Auch diese Anlagefeder 51 greift mit ihren Ausläuferarmen 58 und 59 in die Gittermasche 5 und bildet dort an der Innenseite des äußeren Blechsteges 3 eine Anlagefeder mit Endteilen 60 und 61 und einer Blattfeder 62.

An den Endteilen 60 und 61 der Anlagefedern mit den Blattfedern 62 in der Gittermasche 5 sind Ausprägungen 63 und 64 ausgebildet, die jeweils in eine Abstützausnehmung 65 bzw. 66 in den äußeren Blechstegen 3 bzw. 2 greifen und auf die Ausläuferarme 58 und 59 in Längsrichtung des Stabes 4 einwirkende Kräfte abfangen.

Ferner befinden sich in den äußeren Blechstegen 3 und 2 noch Ausweichausnehmungen 67 und 68 für die Knickstellen 69 in den in der Gittermasche 5 hineingewölbten Blattfedern 62 der Anlagefedern, die sich innerhalb dieser Gittermasche 5 befinden.

**Patentansprüche**

1. Kernreaktorbrennelement mit einem gitterförmigen Abstandshalter, in dem zueinander parallele Stäbe, insbesondere Kernbrennstoff enthaltende Brennstäbe, jeweils in einer Gittermasche befindlich angeordnet sind, der durch flache, zu den Stäben rechtwinklige, hochkant angeordnete Blechstege gebildet ist und der in einer Ecke einer Gittermasche eine mit zwei Endteilen versehene Anlagefeder für einen dort angeordneten Brennstab aufweist, welche mit den beiden Endteilen jeweils in einer Ausnehmung in einem Blechsteg mit einem zu diesem Blechsteg querstehenden Blechsteg verriegelt ist, dadurch gekennzeichnet, daß die Ausnehmungen (57) für die Endteile (52, 53) der Anlagefeder (51) von einer zu den Stäben parallelen Endkante (56) des Blechsteges (31, 21) des Abstandshalters ausgehen, daß der querstehende Blechsteg einer (2, 3) der vier äußeren Blechstege des Abstandshalters ist und daß die beiden Endteile (52, 53) der Anlagefeder (51) je einen zu diesem äußeren Blechsteg (2, 3) parallelen Ausläuferarm (58, 59) aufweisen, der in eine zu der Gittermasche (15, 16) seitlich benachbarte Gittermasche (5) in einer Ecke des Abstandshalters greift und dort an der Innenseite des äußeren Blechsteges (2, 3) ein Endteil (60, 61) einer Anlagefeder für den in dieser Gittermasche (5) in der Ecke des Abstandshalters angeordneten Brennstab (4) bildet.

2. Kernreaktorbrennelement nach Anspruch 1, dadurch gekennzeichnet, daß der äußere Blechsteg (3, 2) in der Gittermasche (5) in der Ecke des Abstandshalters eine Abstützausnehmung (65, 66) aufweist, in die das am Ausläuferarm (58, 59) ausgebildete Endteil (60, 61) der in dieser Gittermasche (5) befindlichen Anlagefeder greift.

3. Kernreaktorbrennelement nach Anspruch 1, dadurch gekennzeichnet, daß der äußere Blechsteg (3, 2) in der Gittermasche (5) in der Ecke des Abstandshalters eine Ausweichausnehmung (67, 68) für die in dieser Gittermasche (5) befindliche Anlagefeder aufweist.

**Claims**

1. A fuel element for a nuclear reactor with a lattice-shaped spacing holder, in which rods which are parallel with one another, in particular fuel rods containing nuclear fuel, are arranged in respective lattice meshes formed from flat sheet metal cross-pieces which are perpendicular to the rods and positioned edgewise, and which holder has in one corner of a lattice mesh a contact spring provided with two end-pieces, for one fuel rod positioned there, which spring is locked at its two end-pieces, in each case, in an aperture in a sheet metal cross-piece, to a sheet bar which is transverse to the first-mentioned sheet metal cross-piece, characterised in that the apertures (57) for the end-pieces (52, 53) of the contact spring (51) start from an end edge (56) of the sheet metal cross-piece (31, 21) fo the spacing holder which is parallel to the rods; that the transverse sheet metal cross-piece is one (2, 3) of the four outer sheet metal cross-pieces of the spacing holder; and that the two end-pieces (52, 53) of the contact spring (51) each have an extension arm (58, 59) which is parallel to this outer sheet metal cross-piece (2, 3), which extension arm engages with a lattice mesh (5) in one corner of the spacing holder which is laterally adjacent to the lattice mesh (15, 16), and there, on the inside of the outer sheet metal cross-piece (2, 3), forms an end-piece (60, 61) of a contact spring for the fuel rod (4) positioned in this lattice mesh (5) in the corner of the spacing holder.

2. A fuel element for an nuclear reactor as claimed in Claim 1, characterised in that the outer sheet metal cross-piece (3, 2) in the lattice mesh (5) in the corner of the spacing holder has a support recess (65, 66), with which engages the end-piece (60, 61) formed by the extension arm (58, 59), of the contact spring positioned in this lattice mesh (5).

3. A fuel element for a nuclear reactor as claimed in Claim 1, charcterised in that the outer sheet metal cross-piece (3) or (2) has, in the lattice mesh (5) in the corner of the range spacer, an alternative recess (67, 68) for the contact spring positioned in this lattice mesh (5).

**Revendications**

1. Assemblage combustible de réacteur nucléaire, comprenant une entretoise en forme de grille dans laquelle des crayons parallèles, notamment des crayons combustibles contenant du combustible nucléaire, sont disposés chacun dans une maille, que est formée de lames de tôle planes, disposées sur champ et à angle droit par rapport aux crayons et qui comporte à un sommet d'une maille de la grille un ressort d'appui, muni de deux parties d'extrémité, pour un crayon combustible qui s'y trouve, ce ressort étant verrouillé par les deux parties d'extrémité dans un évidement d'une lame de tôle avec une lame de tôle transversale à cette dernière, caractérisé en ce que les évidements (57) pour les parties d'extrémité (52, 53) du ressort d'appui (51) partent d'un bord d'extrémité (56), parallèle aux crayons, de la lame de tôle (31, 21) de l'entretoise, en ce que la lame de tôle (2, 3) transversale est l'une des quatre lames de tôle extérieures de l'entretoise et en ce que les deux parties d'extrémité (52, 53) du ressort d'appui (51) comportent chacune un bras sortant (58, 59), parallèle à cette lame de tôle (2, 3) extérieure et pénétrant dans une maille de la grille (5), à l'un des sommets de l'entretoise, qui est adjacente latéralement à la maille de la grille (15, 16) et y forme, du côté intérieur de la lame de tôle (2, 3) extérieure, une partie d'extrémité (60, 61) d'un ressort d'appui d'un crayon combustible (4) disposé dans cette maille de grille (5) au sommet de l'entretoise.

2. Assemblage combustible de réacteur nucléaire suivant la revendication 1, caractérisé en ce que la lame de tôle (2, 3) extérieure comporte, dans la maille de grille (5) et au sommet de l'entretoise, un évidement d'appui (65, 66), dans lequel pénètre la partie d'extrémité (60, 61) constituée par les bras sortant (58, 59), du ressort d'appui se trouvant dans cette maille de grille (5).

3. Assemblage combustible de réacteur nucléaire suivant la revendication 1, caractérisé en ce que la lame de tôle (2, 3) extérieure comporte, dans la maille de grille (5) et au sommet de l'entretoise, un évidement de dégagement (67, 68) du ressort d'appui se trouvant dans cette maille de grille (5).

FIG 1

FIG 4

FIG 3

FIG 2

FIG 5

FIG 7

FIG 6